# EUROPEAN PATENT APPLICATION

(11) **EP 3 933 669 A1**
(43) Date of publication of application: **05.01.2022**
(21) Application number: 20210151.5
(22) Date of filing: 27.11.2020
(51) Int. Cl.: G06K 9/00, G06K 9/22, G06T 7/20

(54) **POSTURE COMPARISON AND CORRECTION METHOD USING APPLICATION CONFIGURED TO CHECK TWO GOLF IMAGES AND RESULT DATA IN OVERLAPPING STATE**

(30) Priority: 29.06.2020 KR 20200079515
(71) Applicant: KS Electronics Co., Ltd., Daejeon (KR)
(72) Inventor: SHIN, Seong hyeon, Gyeongsangnam-do (KR); PARK, chang hee, Daejeon (KR); PARK, Eun Hye, Daejeon (KR); MUN, Bok Cheon, Daejeon (KR)
(74) Representative: dompatent von Kreisler Selting Werner - Partnerschaft von Patent- und Rechtsanwälten mbB

(57) **Abstract**

Disclosed is a posture comparison and correction method using an application configured to check two golf images and result data in an overlapping state, the posture comparison and correction method being capable of analyzing an image of a user captured through a portable device, displaying the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen, and comparing the image of the user with an image of a pro golfer transmitted from a server on a single screen, whereby it is possible to correct the posture of the user.

## Description

### BACKGROUND OF THE INVENTION

### Field of the Invention

The present invention relates to a posture comparison and correction method using an application configured to check two golf images and result data in an overlapping state, and more particularly to a posture comparison and correction method using an application configured to check two golf images and result data in an overlapping state, the posture comparison and correction method being capable of analyzing an image of a user captured through a portable device, displaying the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen, and comparing the image of the user with an image of a pro golfer transmitted from a server on a single screen, whereby it is possible to correct the posture of the user, simultaneously displaying an image of the user captured through a capturing camera connected to the portable device at an angle different from the angle at which the image of the user is captured through the portable device on the portable device, whereby it is possible for the user to easily check their own posture, and comparing the image of the user with the posture image of the pro golfer transmitted from the server, whereby it is possible for the user to correct their swing posture while checking the same.

### Description of the Related Art

At present, various kinds of golf swing analysis software using a camera is based on various methods, such as displaying a golf swing of a user and a golf swing of a pro golfer on a single screen in an overlapping state or linkage to a smartphone application.

In a conventional image-based golf posture correction system, however, an image photographed and recorded in a specific space is loaded and analyzed by an expert based on several inputs. As a result, golf posture analysis time is long and accuracy of analysis data is low, whereby it is difficult for ordinary people to use the image-based golf posture correction system.

In addition, conventionally, correction of a golf swing image is performed by providing a posture correction image using a drawing pen and a simple text message for correction. As a result, user's concern thereabout, interest therein, and reliability thereof are low, whereby the online golf swing posture correction market has been gradually reduced in scale.

The following prior patent discloses an artificial intelligence live golf posture correction apparatus and method capable of displaying video and voice of a pro golfer live on a smart device in real time, performing control such that 1:1 cash settlement is made through a live golf posture correction application module, transmitting a drawing pen service for golf posture, a current golf posture correction value compared with a reference golf posture, video of the pro golfer regarding the corresponding golf posture with voice of the pro golfer to the live golf posture correction application module the cash settlement for which has been completed, having golf lessons from the pro golfer or an expert through live voice communication regardless of time or place, directly taking live advice on a user's incorrect swing and insufficient exercise drills from the pro golfer, and providing complementary exercise drills and exercise method solutions including video and voice of the pro golfer to solve individual swing problems, rather than simple swing analysis, as feedback through primary analysis based on artificial intelligence and systematic swing correction.

For this prior patent, however, real-time communication with the pro golfer is required, and accurate numerical values are not displayed, whereby a user takes lots of time to correct their own posture.

### [Prior Art Document]

### [Patent Document]

Prior Patent: Korean Registered Patent Publication No. 10-1829879 (2018.02.09)

### SUMMARY OF THE INVENTION

It is an object of the present invention to provide a posture comparison and correction method using an application configured to check two golf images and result data in an overlapping state, the posture comparison and correction method being capable of analyzing an image of a user captured through a portable device, displaying the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen, and comparing the image of the user with an image of a pro golfer transmitted from a server on a single screen, whereby it is possible to correct the posture of the user, simultaneously displaying an image of the user captured through a capturing camera connected to the portable device at an angle different from the angle at which the image of the user is captured through the portable device on the portable device, whereby it is possible for the user to easily check their own posture, and comparing the image of the user with the posture image of the pro golfer transmitted from the server, whereby it is possible for the user to correct their swing posture while checking the same.

In accordance with the present invention, the above and other objects can be accomplished by the provision of a posture comparison and correction method using an application configured to check two golf images and result data in an overlapping state, the posture comparison and correction method including a step of executing an application stored in a portable device held by a user, the portable device being configured to perform communication, and photographing a golf swing posture of the user in front through the portable device, a step of processing a swing image of the user, captured through the portable device, through the application to display the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen of the portable device together with the image, a step of the portable device requesting and receiving a posture image and data of a pro golfer stored in a server in response to a request of the user, a step of the portable device displaying the posture image and the data of the pro golfer transmitted from the server and the image and the data of the user on a single screen in an overlapping state through the application, and a step of selecting whether to store the image of the pro golfer and the image of the user in the overlapping state in order to check the images again or to store the images.

In the step of photographing the golf swing posture of the user in front, a left image or a right image of the user may be individually or simultaneously captured through a photographing camera connected to the portable device through near-field wireless communication.

The step of displaying the data on the screen of the portable device together with the image may include a step of detecting the golf ball from the image of the user captured through the portable device, a step of detecting the position of a head of the user and the golf club from the image of the user captured through the portable device, a step of checking a swing readiness posture of the user and determining whether the user is ready to swing the golf club through a full-body image of the user captured through the portable device, a step of generating a protractor based on the golf ball and displaying the generated protractor and graduations thereof on the image in the portable device, a step of determining whether the user swings the golf club through the portable device, a step of tracking the golf club swung by the user and the golf ball hit by the golf club, a step of measuring the swing speed of the tracked golf club, the swing angle of the golf club, the swing form of the golf club, the angle of the head of the golf club, the hitting angle of the tracked golf ball, the speed of the golf ball, the flying distance of the golf ball, and the trajectory of the golf ball, and a step of synthesizing the trajectory of the golf ball, the speed of the golf ball, and the hitting angle of the golf ball with the image captured through the portable device to generate an image.

In the step of displaying the data on the screen of the portable device together with the image, the left image or the right image of the user, individually or simultaneously captured through the photographing camera, and the front image of the user may be displayed together with the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball on split screens.

In the step of displaying the images and the data on the screen in the overlapping state, the front image of the user captured through the portable device and the left image or the right image of the user individually or simultaneously through the capturing camera may be simultaneously displayed together with a corresponding image of the pro golfer on the single screen.

### BRIEF DESCRIPTION OF THE DRAWINGS

The above and other objects, features and other advantages of the present invention will be more clearly understood from the following detailed description taken in conjunction with the accompanying drawings, in which:

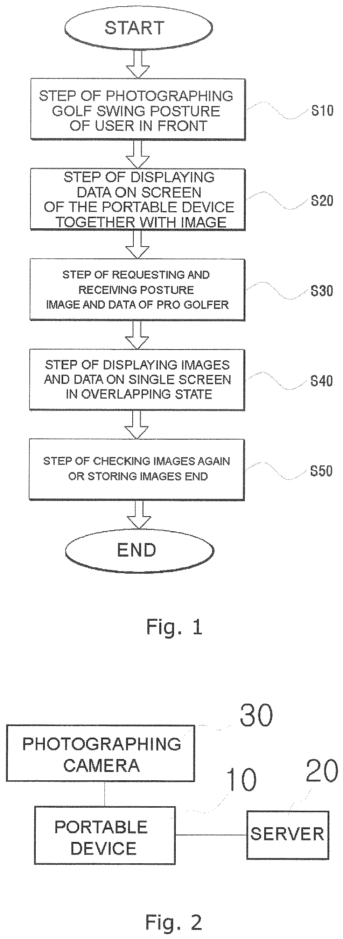

FIG. 1 is an overall flowchart showing a posture comparison and correction method using an application configured to check two golf images and result data in an overlapping state according to an embodiment of the present invention;
FIG. 2 is a view showing the construction of the posture comparison and correction method using the application configured to check the two golf images and the result data in the overlapping state according to the present invention;

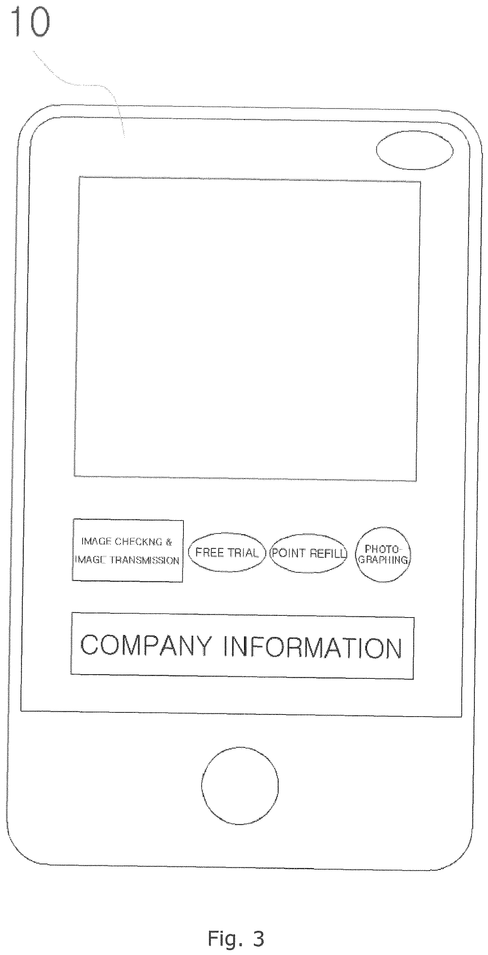

FIG. 3 is a view showing an application screen of a portable device for performing the posture comparison and correction method using the application configured to check the two golf images and the result data in the overlapping state according to the present invention;

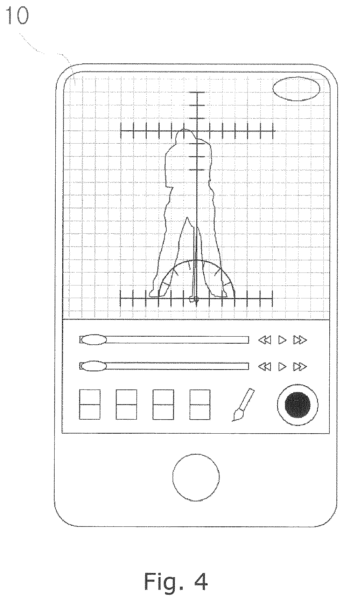

FIG. 4 is a view showing a front image of a user captured by the portable device for performing the posture comparison and correction method using the application configured to check the two golf images and the result data in the overlapping state according to the present invention;

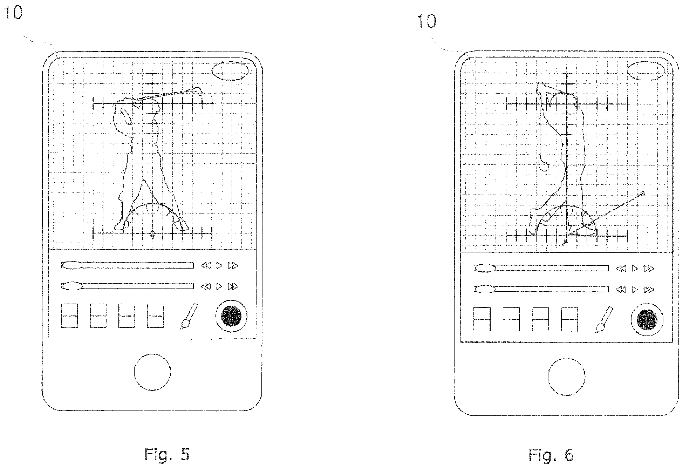

FIG. 5 is a view showing a front image of the user, who swings a golf club, captured by the portable device for performing the posture comparison and correction method using the application configured to check the two golf images and the result data in the overlapping state according to the present invention;
FIG. 6 is a view showing a front image of the user, who hits a golf ball by swinging the golf club, captured by the portable device for performing the posture comparison and correction method using the application configured to check the two golf images and the result data in the overlapping state according to the present invention;

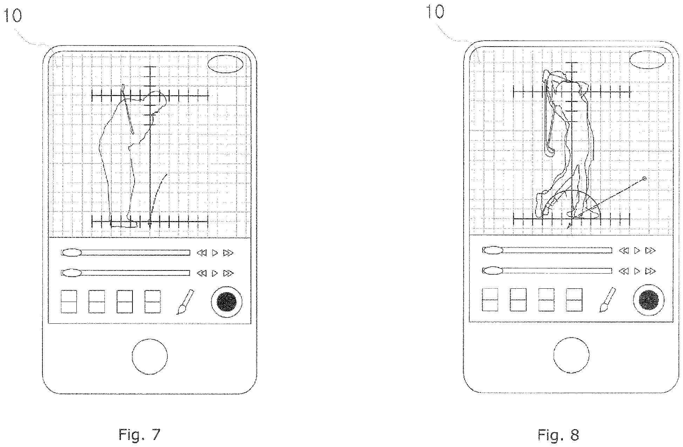

FIG. 7 is a view showing a side image of the user, who swings the golf club, captured by the portable device for performing the posture comparison and correction method using the application configured to check the two golf images and the result data in the overlapping state according to the present invention;
FIG. 8 is a view showing that an image of the user, who swings the golf club, captured by the portable device for performing the posture comparison and correction method using the application configured to check the two golf images and the result data in the overlapping state according to the present invention and an image of a pro golfer are displayed in an overlapping state; and

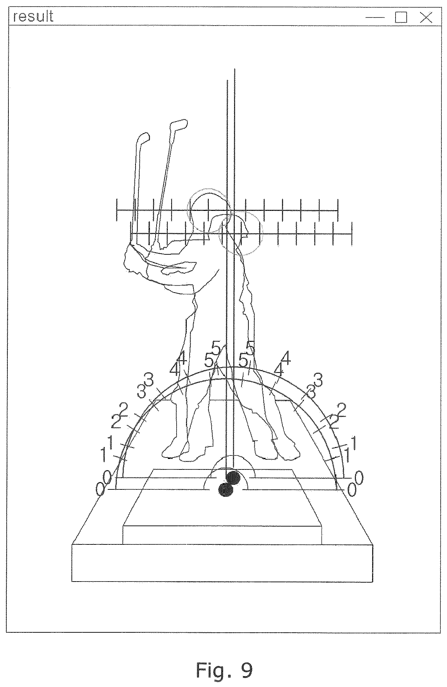

FIG. 9 is a view showing that an image of the user, who swings the golf club, captured by the portable device for performing the posture comparison and correction method using the application configured to check the two golf images and the result data in the overlapping state according to the present invention and an image of the pro golfer are displayed in an overlapping state.

### DETAILED DESCRIPTION OF THE INVENTION

Hereinafter, embodiments of the present invention will be described in detail with reference to the accompanying drawings. The embodiments of the present invention are provided to describe a single invention, and the scope of right of the invention is not limited to the illustrated embodiments. In addition, only the main elements are shown in an enlarged state in the accompanying drawings and the subordinate elements are omitted therefrom for clarity of the invention, and therefore the present invention should not be interpreted based on the accompanying drawings.

The present invention relates to a posture comparison and correction method using an application configured to check two golf images and result data in an overlapping state, the posture comparison and correction method including a step of executing an application stored in a portable device held by a user, the portable device being configured to perform communication, and photographing a golf swing posture of the user in front through the portable device, a step of processing a swing image of the user, captured through the portable device, through the application to display the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen of the portable device together with the image, a step of the portable device requesting and receiving a posture image and data of a pro golfer stored in a server in response to a request of the user, a step of the portable device displaying the posture image and the data of the pro golfer transmitted from the server and the image and the data of the user on a single screen in an overlapping state through the application, and a step of selecting whether to store the image of the pro golfer and the image of the user in the overlapping state in order to check the images again or to store the images.

In the step of photographing the golf swing posture of the user in front, a left image or a right image of the user may be individually or simultaneously captured through a photographing camera connected to the portable device through near-field wireless communication.

The step of displaying the data on the screen of the portable device together with the image may include a step of detecting the golf ball from the image of the user captured through the portable device, a step of detecting the position of a head of the user and the golf club from the image of the user captured through the portable device, a step of checking a swing readiness posture of the user and determining whether the user is ready to swing the golf club through a full-body image of the user captured through the portable device, a step of generating a protractor based on the golf ball and displaying the generated protractor and graduations thereof on the image in the portable device, a step of determining whether the user swings the golf club through the portable device, a step of tracking the golf club swung by the user and the golf ball hit by the golf club, a step of measuring the swing speed of the tracked golf club, the swing angle of the golf club, the swing form of the golf club, the angle of the head of the golf club, the hitting angle of the tracked golf ball, the speed of the golf ball, the flying distance of the golf ball, and the trajectory of the golf ball, and a step of synthesizing the trajectory of the golf ball, the speed of the golf ball, and the hitting angle of the golf ball with the image captured through the portable device to generate an image.

In the step of displaying the data on the screen of the portable device together with the image, the left image or the right image of the user, individually or simultaneously captured through the photographing camera, and the front image of the user may be displayed together with the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball on split screens.

In the step of displaying the images and the data on the screen in the overlapping state, the front image of the user captured through the portable device and the left image or the right image of the user individually or simultaneously through the capturing camera may be simultaneously displayed together with a corresponding image of the pro golfer on the single screen.

FIG. 1 is an overall flowchart showing a posture comparison and correction method using an application configured to check two golf images and result data in an overlapping state according to an embodiment of the present invention, wherein the posture comparison and correction method includes a step (S10) of executing an application stored in a portable device 10 held by a user, the portable device being configured to perform communication, and photographing a golf swing posture of the user in front through the portable device 10, a step (S20) of processing a swing image of the user, captured through the portable device 10, through the application to display the swing speed of a golf club, the swing angle of the golf club, the swing form of the golf club, the angle of a head of the golf club, the hitting angle of a golf ball, the speed of the golf ball, the flying distance of the golf ball, and the trajectory of the golf ball on a screen of the portable device 10 together with the image, a step (S30) of the portable device 10 requesting and receiving a posture image and data of a pro golfer stored in a server 20 in response to a request of the user, a step (S40) of the portable device 10 displaying the posture image and the data of the pro golfer transmitted from the server 20 and the image and the data of the user on a single screen in an overlapping state through the application, and a step (S50) of selecting whether to store the image of the pro golfer and the image of the user in the overlapping state in order to check the images again or to store the images.

FIG. 2 is a view showing the construction of the posture comparison and correction method using the application configured to check the two golf images and the result data in the overlapping state according to the present invention, FIG. 3 is a view showing an application screen of the portable device for performing the posture comparison and correction method using the application configured to check the two golf images and the result data in the overlapping state according to the present invention, FIG. 4 is a view showing a front image of the user captured by the portable device for performing the posture comparison and correction method using the application configured to check the two golf images and the result data in the overlapping state according to the present invention, FIG. 5 is a view showing a front image of the user, who swings the golf club, captured by the portable device for performing the posture comparison and correction method using the application configured to check the two golf images and the result data in the overlapping state according to the present invention, FIG. 6 is a view showing a front image of the user, who hits the golf ball by swinging the golf club, captured by the portable device for performing the posture comparison and correction method using the application configured to check the two golf images and the result data in the overlapping state according to the present invention, FIG. 7 is a view showing a side image of the user, who swings the golf club, captured by the portable device for performing the posture comparison and correction method using the application configured to check the two golf images and the result data in the overlapping state according to the present invention, FIG. 8 is a view showing that an image of the user, who swings the golf club, captured by the portable device for performing the posture comparison and correction method using the application configured to check the two golf images and the result data in the overlapping state according to the present invention and an image of the pro golfer are displayed in an overlapping state, and FIG. 9 is a view showing that an image of the user, who swings the golf club, captured by the portable device for performing the posture comparison and correction method using the application configured to check the two golf images and the result data in the overlapping state according to the present invention and an image of the pro golfer are displayed in an overlapping state.

Referring to FIGS. 1 to 5, in the step (S10) of photographing the golf swing posture of the user in front, the application stored in the portable device 10, which is held by the user and which is configured to perform communication, is executed, and the golf swing posture of the user is photographed in front through the portable device 10.

Here, the portable device 10 is a device capable of performing photographing and communication, such as a smartphone, a tablet PC, or a laptop computer.

When the user is photographed through the portable device 10, a front image of the user may also be captured although a front image of the user may be captured.

In addition, a left image or a right image of the user may be individually or simultaneously captured through a photographing camera 30 connected to the portable device 10 through near-field wireless communication, and the portable device 10 may receive the captured left or right image of the user and compare the received left or right image of the user with the image of the pro golfer.

After the image of the user is captured through the portable device 10 in the step (S10) of photographing the golf swing posture of the user in front, the swing image of the user captured through the portable device 10 is processed through the application, and the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are displayed on the screen of the portable device 10 together with the image in the step (S20) of displaying the data on the screen of the portable device 10 together with the image.

In the step (S20) of displaying the data on the screen of the portable device 10 together with the image, the left image or the right image of the user, individually or simultaneously captured through the photographing camera 30, and the front image of the user are displayed together with the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball on split screens.

The step (S20) of displaying the data on the screen of the portable device 10 together with the image includes a step of detecting the golf ball from the image of the user captured through the portable device 10, a step of detecting the position of a head of the user and the golf club from the image of the user captured through the portable device 10, a step of checking a swing readiness posture of the user and determining whether the user is ready to swing the golf club through a full-body image of the user captured through the portable device 10, a step of generating a protractor based on the golf ball and displaying the generated protractor and graduations thereof on the image in the portable device 10, a step of determining whether the user swings the golf club through the portable device 10, a step of tracking the golf club swung by the user and the golf ball hit by the golf club, a step of measuring the swing speed of the tracked golf club, the swing angle of the golf club, the swing form of the golf club, the angle of the head of the golf club, the hitting angle of the tracked golf ball, the speed of the golf ball, the flying distance of the golf ball, and the trajectory of the golf ball, and a step of synthesizing the trajectory of the golf ball, the speed of the golf ball, and the hitting angle of the golf ball with the image captured through the portable device 10 to generate an image.

The step of detecting the golf ball is a step of detecting the golf ball from the image of the user captured through the portable device 10 and displaying the protractor and all graduations thereof based on the golf ball on the screen of the portable device 10.

After the golf ball is detected from the image of the user in the step of detecting the golf ball, the position of the head of the user and the golf club are detected from the image of the user captured through the portable device 10 in the step of detecting the position of the head of the user and the golf club.

At the time of detecting the position of the head of the user and the golf club, the uppermost part of a shape, the motion of which is sensed by the portable device 10, is detected as the head of the user, and the part of the shape located between the head of the user and the golf ball is detected as the golf club.

After the position of the head of the user and the golf club are detected in the step of detecting the position of the head of the user and the golf club, the swing readiness posture of the user is checked and whether the user is ready to swing the golf club is determined through the full-body image of the user captured through the portable device 10 in the step of determining whether the user is ready to swing the golf club.

Whether the user is ready to swing the golf club is determined as follows. Time for which the user does not move in the state of standing with the golf club on the ground is measured, and in the case in which the measured time is equal to or longer than time set in the application, it is determined that the user is ready to swing the golf club.

Upon determining that the user is ready to swing the golf club in the step of determining whether the user is ready to swing the golf club, the protractor is generated based on the golf ball and the generated protractor and the graduations thereof are displayed on the image in the portable device 10 in the step of displaying the protractor and the graduations thereof on the image in the portable device 10.

At this time, in the case in which a side image of the user is separately captured using the photographing camera 30 connected to the portable device 10, the protractor and the graduations thereof are displayed on the captured side image of the user.

After the protractor and the graduations thereof are displayed on the portable device 10 in the step of displaying the protractor and the graduations thereof on the image in the portable device 10, the motion of the golf club is checked from the image of the user captured through the portable device 10 to determine whether the user swings the golf club in the step of determining whether the user swings the golf club.

Upon determining that the user swings the golf club in the step of determining whether the user swings the golf club, the golf club swung by the user and the golf ball hit by the golf club are tracked in the step of tracking the golf club and the golf ball.

The swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are tracked in the step of tracking the golf club and the golf ball, and then the trajectory of the tracked golf ball, the speed of the tracked golf ball, and the hitting angle of the golf ball are measured in the step of measuring the speed and the hitting angle of the golf ball.

After the swing speed of the tracked golf club, the swing angle of the golf club, the swing form of the golf club, the angle of the head of the golf club, the hitting angle of the tracked golf ball, the speed of the golf ball, the flying distance of the golf ball, and the trajectory of the golf ball are measured in the measurement step, the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are synthesized with the image captured through the portable device 10 to generate the image in the step of generating the image.

At this time, the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are displayed on the image in the portable device 10 as capture images based on paths in order to easily distinguish between the path along which the golf ball moves and the path of the golf club.

After the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are displayed together with the image of the user in the step (S20) of displaying the data on the screen of the portable device 10 together with the image, as described above, the portable device 10 requests and receives the posture image and data of the pro golfer stored in the server 20 in response to the request of the user in the step (S30) of requesting and receiving the data.

At this time, the front image and the side images may be all or selectively received as the posture image of the pro golfer.

In addition, the portable device 10 may receive the position of a head of the pro golfer, the angle of an arm of the pro golfer, the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball as the data received together with the posture image of the pro golfer.

Referring to FIGS. 6 to 9, upon receiving the posture image and the data of the pro golfer in the step (S30) of requesting and receiving the data, the portable device 10 displays the posture image and the data of the pro golfer transmitted from the server 20 and the image and the data of the user on the single screen in the overlapping state through the application in the step (S40) of displaying the images and the data on the screen in the overlapping state.

At the time of displaying the posture image and the data of the pro golfer and the image and the data of the user in the overlapping state, the posture image and the data of the pro golfer and the image and the data of the user are displayed using different colors or different levels of brightness in order to distinguish the posture image and the data of the pro golfer from the image and the data of the user such that the user can easily check and correct their own posture.

After the images and the data of the pro golfer and the user are displayed in the overlapping state in the step (S40) of displaying the images and the data on the screen in the overlapping state, whether to store the image of the pro golfer and the image of the user in the overlapping state is selected in order to check the images again or to store the images in the checking or storing step (S50).

In the step (S40) of displaying the images and the data on the screen in the overlapping state, the front image of the user captured through the portable device 10 and the left image or the right image of the user individually or simultaneously captured through the capturing camera 30 are simultaneously displayed together with the corresponding image of the pro golfer on the single screen.

In the case in which only the front image of the user is captured though the application, as described above, the captured image and data of the user are displayed on the screen of the portable device 10, and the user selects the image and data of the pro golfer so as to be displayed with the image of the user in the overlapping state. Alternatively, only the image of the user may be displayed.

In the case in which both side images are also included in addition to the front image as the images captured through the portable device 10, the screen of the portable device 10 is split, all of the images are displayed on the split screens, and in the case in which the user selects a desired one of the split screens, the selected screen is enlarged such that only the selected screen is displayed.

Consequently, the image selected by the user and the corresponding image of the pro golfer are displayed on the enlarged single screen of the portable device 10 in the overlapping state.

In addition, although the portable device 10 is capable of simultaneously reproducing the image of the user and the image of the pro golfer on the single screen in the overlapping state, a separate reproduction button is provided through the application of the portable device 10 such that the images can be individually reproduced.

At the time of displaying the images and the data of the pro golfer and the user on the single screen through the application, the server 20 may provide the image and the data of the pro golfer to the portable device 10 free of charge or for a fee as needed.

As is apparent from the above description, the present invention has effects in that the image of the user captured through the portable device is analyzed, the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball are displayed on the screen, and the image of the user is compared with the image of the pro golfer transmitted from the server on the single screen, whereby it is possible to correct the posture of the user.

In addition, the present invention has effects in that the image of the user captured through the capturing camera connected to the portable device at the angle different from the angle at which the image of the user is captured through the portable device is simultaneously displayed on the portable device, whereby it is possible for the user to easily check their own posture, and the image of the user is compared with the posture image of the pro golfer transmitted from the server, whereby it is possible for the user to correct their swing posture while checking the same.

The posture comparison and correction method using the application configured to check the two golf images and the result data in the overlapping state described above is not limited to the construction and operation of the embodiments described above. All or some of the embodiments may be selectively combined to provide various modifications.

## Claims

1. A posture comparison and correction method using an application configured to check two golf images and result data in an overlapping state, the posture comparison and correction method comprising:
executing an application stored in a portable device held by a user, the portable device being configured to perform communication, and photographing a golf swing posture of the user in front through the portable device;
processing a swing image of the user, captured through the portable device, through the application to display a swing speed of a golf club, a swing angle of the golf club, a swing form of the golf club, an angle of a head of the golf club, a hitting angle of a golf ball, a speed of the golf ball, a flying distance of the golf ball, and a trajectory of the golf ball on a screen of the portable device together with the image;
the portable device requesting and receiving a posture image and data of a pro golfer stored in a server in response to a request of the user;
the portable device displaying the posture image and the data of the pro golfer transmitted from the server and the image and the data of the user on a single screen in an overlapping state through the application; and
selecting whether to store the image of the pro golfer and the image of the user in the overlapping state in order to check the images again or to store the images.

2. The posture comparison and correction method according to claim 1, wherein, in the step of photographing the golf swing posture of the user in front, a left image or a right image of the user is individually or simultaneously captured through a photographing camera connected to the portable device through near-field wireless communication.

3. The posture comparison and correction method according to claim 1, wherein the step of displaying the data on the screen of the portable device together with the image comprises:
detecting the golf ball from the image of the user captured through the portable device;
detecting a position of a head of the user and the golf club from the image of the user captured through the portable device;
checking a swing readiness posture of the user and determining whether the user is ready to swing the golf club through a full-body image of the user captured through the portable device;
generating a protractor based on the golf ball and displaying the generated protractor and graduations thereof on the image in the portable device;
determining whether the user swings the golf club through the portable device;
tracking the golf club swung by the user and the golf ball hit by the golf club;
measuring the swing speed of the tracked golf club, the swing angle of the golf club, the swing form of the golf club, the angle of the head of the golf club, the hitting angle of the tracked golf ball, the speed of the golf ball, the flying distance of the golf ball, and the trajectory of the golf ball; and
synthesizing the trajectory of the golf ball, the speed of the golf ball, and the hitting angle of the golf ball with the image captured through the portable device to generate an image.

4. The posture comparison and correction method according to claim 1 or 2, wherein, in the step of displaying the data on the screen of the portable device together with the image, the left image or the right image of the user, individually or simultaneously captured through the photographing camera, and the front image of the user are displayed together with the swing speed of the golf club, the swing angle of the golf club, the swing form of the golf club, the angle of the head of the golf club, the hitting angle of the golf ball, the speed of the golf ball, the flying distance of the golf ball, and the trajectory of the golf ball on split screens.

5. The posture comparison and correction method according to claim 1 or 2, wherein, in the step of displaying the images and the data on the screen in the overlapping state, the front image of the user captured through the portable device and the left image or the right image of the user individually or simultaneously through the capturing camera are simultaneously displayed together with a corresponding image of the pro golfer on the single screen.
